# EUROPEAN PATENT SPECIFICATION

(11) **EP 2 714 849 B1**
(45) Date of publication and mention of the grant of the patent: **10.08.2016**
(21) Application number: 11729171.6
(22) Date of filing: 31.05.2011
(51) Int. Cl.: C10G 31/06, C10G 33/06, C10G 53/02, B01D 35/00, B01D 39/00

(54) **METHOD AND APPARATUS FOR REMOVING WATER FROM A PETROCHEMICAL PRODUCT**
VERFAHREN UND VORRICHTUNG ZUM ENTFERNEN VON WASSER AUS EINEM PETROCHEMISCHEN PRODUKT
PROCÉDÉ ET APPAREIL POUR ÉLIMINER DE L'EAU D'UN PRODUIT PÉTROCHIMIQUE

(43) Date of publication of application: 09.04.2014
(73) Proprietor: Claridian ApS, 2605 Brøndby (DK)
(72) Inventor: KRISTIANSEN, Ingolf, Christchurch, Dorset BH23 3DU (GB)
(74) Representative: Budde Schou A/S
(86) International application number: PCT/IB2011/052384
(87) International publication number: WO 2012/164348

(56) References cited:
- WO-A1-2004/039922
- WO-A1-2007/015644
- DE-A1- 3 935 260
- US-A- 2 116 344
- US-A- 4 349 438
- US-A- 4 681 660

## Description

The present invention pertains to a method and apparatus for removing water from petrochemical products. A method and apparatus for removing alien liquids from petrochemical products in combination with a tubular filter for filtering solid particles from a petrochemical product and a method of manufacturing said filter and a method of filtering petrochemical products is also disclosed.

### BACKGROUND OF THE INVENTION

The technical industries have problems with alien liquid contaminations in petrochemical products for lubrication, different power transmissions or transformers (hydraulics, gears, valves, etc.). Such contaminated lubricating oil used in internal combustion engines and other equipment is a principal cause of excessive wear and deterioration of engine parts and related equipment. At present, most internal combustion engines employ only a conventional mechanical filter for extracting materials such as dirt, carbon, soot, metal particles and other similar foreign material from lubricating oil. Liquid contaminants such as condensates, water and fuel, are often emulsified in the lubricating oil and cannot be separated by a conventional filter. It is therefore necessary for the lubricating oil of internal combustion engines using such mechanical filters to be changed at frequent intervals in order to minimize engine damage by contaminants entrained therein.

In recent years the increasing worldwide price of petrochemical products has made it imperative to develop ways of reconditioning oil, e.g. lubricating oil, so that it may be used and reused for a longer time than hitherto. In this way only small amounts of additional lubricating oil are required by engine usage.

The problem of liquid contaminants has been recognized, and some efforts have been made to develop devices which use heat as a mechanism for separating oil and contaminants. Exemplary previous devices of this type are disclosed in US 2,635,759, US 2,785,109, US 2,839,196, US 3,550,871, US 3,616,885, US 3,915,860, US 4,006,084, US 4,146,475 US 4,349,438.

These filters are, however not very efficient in removing liquids from petrochemical products, such as oil. As a consequence, these conventional oil filters, by and large, are only slightly superior to the prior disposable filters which remove only solid contaminants. With these oil filtering devices the engine lubricating oil may only be used for a slightly longer time than with conventional solid contaminant removing filters. The marginal improvement in oil recycling life that results from removing a small amount of the liquid contaminants cannot justify the incremental cost required to achieve this improvement.

In addition to the above mentioned kind of filtering devices it has for example been suggested in WO 86/04830 and WO 2007/015644 to use atomizing nozzles in order to enhance the separation of water from lubricating oil. However, there has been a need in the marked for more efficient filters for removal of alien liquids, especially water, from oil, and also for efficient filters, which are able to effectively remove both liquids and solid particle contaminants in oil.

Traditionally, existing fluid filters that are adapted for filtering particles from fluids, are surface filters in the sense that the filtering occurs at just the outer surface of the element where the fluid first enters the element. With very fine surface filter elements, particles tend to accumulate at the outer surface, thereby loading the filter element and cutting off the flow of fluid through it. As a result, filtering is degraded and the element must be changed more frequently than desired. This has been a particular problem with high viscosity fluids such as oil, engine oil in particular. In order to alleviate this surface build-up problem so called string/yarn wound fillers wherein a yarn is wound on a tubular bobbin have been developed. These filters have the advantage, that the fluid is filtered all the way along the thickness of the wound yarn Examples of such yarn wound filters are known from EP 0489157, US 5,552,065, US 4,761,231, US 5,772,952, FR 2097502 and WO 2007/015643.

### SUMMARY OF THE INVENTION

It is an object to provide an improved method and apparatus for removing water in petrochemical products.

There is also provided a method and apparatus for removing both alien liquids and solid particle contaminants in petrochemical products.

According to the present invention, the above-mentioned object is fulfilled by a filter as disclosed in Claim 1.

By providing a plurality of atomizing nozzles for atomizing the petrochemical product into the ventilation chamber, the petrochemical product does not percolate as a liquid into the ventilation chamber, but is sprayed as a mist into the ventilation chamber. The tiny droplets of this mist has therefore a much greater surface area than a liquid form of the petrochemical product, which implies that water contaminants much easier can evaporate from the petrochemical product. Due to the different thermodynamic properties of the petrochemical product and the contaminants they react differently to changes in heat and/or pressure. Thus, when for example water contaminated petrochemical product is dispensed into the ventilation chamber as a mist of atomized droplets, the vacuum will enhance evaporation of water from the droplets. These vaporised contaminants, e.g. steam, is then vented out of the ventilation chamber, e.g. through a non-return valve, while the petrochemical product is drained out in liquid form. A plurality of atomizing nozzles is used in order to ensure an adequate flow rate, and the actual number nozzles needed may be chosen in dependence of the particular application of the inventive filter.

Investigations performed by the applicant have shown that good results may be achieved with a filter, wherein the vacuum in the ventilation chamber corresponds to a pressure of below 0.95 bar, preferably below 0.75 bar or between 0.5 bar and 0.95 bar.

In a preferred embodiment the petrochemical product is heated to between 70 degrees Celsius and 100 degrees Celsius prior to atomization by the atomizing nozzles, preferably between 90 degrees Celsius and 100 degrees Celsius prior to atomization by the atomizing nozzles. Hereby is achieved that the eventual water within the petrochemical product is close to or at its boiling temperature, which implies that it easier evaporates from the atomized droplets when injected into the ventilation chamber. Moreover a larger quantity of contaminants, e.g. water will evaporate from the droplets.

The heating of the petrochemical product is achieved by heating means in the pipe. Hereby is achieved a very compact unit.

The pipe and distillation head are made from a metal or metal alloy comprising aluminium, which has good heat conductivity and low reactivity with petrochemical products, such as oil.

Advantageously, the filter may further comprise thermostats operatively connected to the pipe and distillation head and the heating means. Hereby is achieved that the petrochemical product may be heated to the desired temperature without the application of too much energy for heating.

The nozzles have nozzle openings between 0.5 mm and 3 mm, more preferably between 0.7 and 1.2 mm. Atomization is achieved by selecting a nozzle opening size that creates a significant pressure differential across the opening. The viscosity of petrochemical products, such as engine oil is largely dependent of temperature, so the nozzle sizes are preferably chosen in dependence of the applied temperature and the type of petrochemical product to be filtered. To this end the applicant estimates that by using nozzle opening sizes as mentioned above it would be possible to atomize most types of petrochemical oils.

However, there is a delicate balance in selecting proper nozzle opening sizes, because the opening size controls both the extent of atomization and the flow rate through the filter. Selection of the nozzle opening also controls the pressure differential between the container and the ventilation chamber.

The nozzles have a barrel that is rifled in order to thereby impart a rotational motion to the mist of droplets generated by the nozzle and thereby enhance the separation (evaporation) of contaminants from them.

The length of the barrel of each of the nozzles is between 20 mm and 40 mm.

The technical industries have particular difficulties with alien liquid contaminants in petrochemical products for lubrication and different transmissions or transformers (hydraulics, gears, valves etc.). These contaminants mainly consists of water (e.g. from condensation, leaks, frost, etc.). Non combusted fuel remnants, acids and eventually other alien liquids can also be present. Acids may be formed in the presence of water. Thus, in a preferred embodiment, the filter may be especially configured to remove water or water borne contaminants, i.e. the alien liquid is preferably water.

In a preferred embodiment the ventilation chamber has a sloped floor with a drain that during use is configured to be situated at the lowest place of the floor. Hereby is achieved that the petrochemical product - relieved form most of the, e.g. water, contaminants - may be drained from the bottom of the ventilation chamber, while the gaseous phase, e.g. steam, is vented out from an upper part of the ventilation chamber through a non-return valve. Here the terms "lower" and "upper" refers to the lower and upper parts of the ventilation chamber, when the filter is installed in its correct use position.

Advantageously, the petrochemical product is pressurized, e.g. to a pressure of between 2 bar and 6 bar, before it atomized through the nozzles.

The above mentioned and further objects are achieved by a second aspect of the invention, pertaining to a method for removing water from a petrochemical product, the method comprising the steps disclosed in claim 7.

In an embodiment of the method according to the second aspect of the invention, the step of healing the petrochemical product further comprises the step of leading the petrochemical product through a heated inlet pipe and further into a heated distillation head.

In an embodiment of the method according to the second aspect of the invention, the step of removing a part of a gaseous phase of the alien liquid from the ventilation chamber comprises the step of ventilating said gaseous phase of the alien liquid out of the chamber through a non-return valve.

In an embodiment of the method according to the second aspect of the invention, the step of generating a vacuum within the ventilation chamber comprises the sub step of generating a pressure of below 0.95 bar, preferably below 0.75 bar or between 0.5 bar and 0.95 bar within the ventilation chamber.

In an embodiment of the method according to the second aspect of the invention, the step of heating the petrochemical product comprises the sub step of heating the petrochemical product to between 70 degrees Celsius and 100 degrees Celsius prior to atomization by the atomizing nozzles, preferably between 90 degrees Celsius and 100 degrees Celsius prior to atomization by the atomizing nozzles.

In an embodiment of the method according to the second aspect of the invention, the petrochemical product is pressurized to a pressure of between 2 bar to 6 bar before injecting it into the ventilation chamber through the plurality of atomizing nozzles.

The nozzles have rifled barrels for imparting a rotational movement to the petrochemical product that is injected into the ventilation chamber through the nozzles.

The filter, not according to the invention, further comprises a tubular core with a plurality of apertures and a hollow interior, said core having an open end for fluid communication with the hollow interior, a length of yarn wound in a series of at least three layers around an outer surface of the core, wherein the first layer closest to the surface of the core comprises at least 5 windings of the yarn, the second layer comprises at least 6 windings of the yarn and the third layer comprises at least 10 windings of the yarn and wherein two consecutive layers have been wound in accordance with different winding patterns.

Investigations performed by the applicant has shown that this particular way of building up the filter in a layered structure of yarn that wound onto the tubular core in accordance with winding patterns that are different for two consecutive layers and wherein the layers are built up with the minimum number of windings in the first, second, and third layer as stated above, is particularly effective filtering petrochemical fluids, especially oil, for particles having a diameter or average particle size in the range from 0.5 µm to 50 µm, without having using excessive pressure, but merely by letting the fluid flow freely through the filter at a pressure that is usually used in engines, power transmissions, such as hydraulics, gears, valves etc.

The tubular core is preferably cylindrical in its shape, and it is preferably made form plastic or metal. The tubular core with the yarn wound onto it can be adapted to be bent into a curved shape along its longitudinal axis. Thus, facilitating a filter that can be bent around a corner, or other structure that is not compatible with a strictly cylindrical shape.

In one embodiment not according to the invention each of the three layers have been wound in accordance with a winding pattern that is different from the winding pattern of the other layers. Hereby is achieved a filter wherein each layer mainly filters particles from the fluid up to a certain size. Thus, allowing a more effective utilization of the total volume of the filter for the filtering purpose.

The first layer comprises preferably less than 20 windings of the yarn. The second layer can comprise less than 25 windings of the yarn. The third layer can comprise less than 35 windings of the yarn.

The first layer can comprise between 7 and 14 windings of the yarn. The second layer can comprise between 8 and 14 windings of the yarn, and The third layer can comprise between 14 and 24 windings of the yarn.

In order to facilitate a good flow of the fluid through the filter without applying excessive pressure, each of the three layers comprises, preferably, less than 50 - 70 windings of yarn.

One way of providing a particular winding pattern is by using a particular winding angle, and the applicant has found it advantageous if the first layer of yarn has been wound around the outer surface of the core at an angle larger than 60 degrees with respect to an axis parallel to the tubular core. In another embodiment not according to the invention the second layer of yarn has been wound around the outer surface of the core at an angle larger than 55 degrees with respect to an axis parallel to the tubular core, and in yet another embodiment not according to the invention the third layer of yarn has been wound around the outer surface of the core at an angle larger than 50 degrees with respect to an axis parallel to the tubular core. Preferably, the angle with which the yarn has been wound around the core is different for two consecutive layers, in order to facilitate winding patterns that are able to trap particles of different sizes.

Preferably, the yarn comprises a mix of natural and synthetic fibers. Since natural fibers are hydrophilic, while synthetic fibers generally are hydrophobic, a filter wherein the yarn is made of a mix of both natural and synthetic fibers has the additional advantage that in addition to being able to filter particles from the fluid, also water may be absorbed by the yarn and thereby filtered from the fluid without having to heat the filter.

In another embodiment not according to the invention the natural fibers are chosen from a list of fibers comprising cotton and/or wool and the synthetic fibers are chosen from a list of fibers comprising any of the following matenals: acryl, polyester, flax, polyamide, acetate and/or viscose. Cotton and wool are cheap natural fibers that are easy to mix with any or a plurality of the synthetic fibers mentioned above. Thus facilitating an effective, yet cheap yarn that for the filter.

In one embodiment not according to the invention the yarn comprises less than 40% natural fibers. In another embodiment not according to the invention the yarn comprises more than 17% acryl. In yet another embodiment not according to the invention the yarn comprises more than 12% polyester, and in yet even another embodiment not according to the invention the yarn comprises more than 12% flax. Preferably, the yarn comprises less than 2% polyamide or between 3% and 15% polyamide or between 5% and 9% polyamide.

Alternatively, or in addition to the above, the yarn may comprise more than 1% acetate or between 1% and 10% acetate, or between 1 % and 6% acetate or between 2% and 4% acetate or between 1% and 2,5% acetate.

In an alternative embodiment not according to the invention the yarn comprises more than 1% viscose, or between 1% and 10% viscose or between 1% and 5% viscose or between 1% and 3% viscose.

Another embodiment of the first aspect not according to the invention pertains to a filter comprising a tubular core with a plurality of apertures and a hollow interior, said core having an open end for fluid communication with the hollow interior, a length of yarn wound in a series of at least three layers around an outer surface of the core, at least two of the at least three layers being wound in accordance with different winding patterns, the yarn comprising a mixture of natural and synthetic fibers, wherein the natural fibers constitutes less than 40% of the yarn, and the reminder constitutes fibers or a mix of fibers made from one or more of the following synthetic materials: acryl, polyester, flax, polyamide, acetate.

By providing a layered filter with a yarn that is made from a mix of natural constituting less than 40% (of the yarn) and synthetic fibers made from any of the synthetic materials mentioned above, a filter is achieved that is particularly effective for filtering particles having a diameter or an average particle size between 0.5 µm and 50 µm from a petrochemical fluid such as oil.

In one embodiment not according to the invention the yarn comprises more than 17% acryl. In another embodiment of the second aspect not according to the invention the yarn comprises more than 12% polyester, and in yet another embodiment not according to the invention the yarn comprises more than 12% flax.

Preferably, the yarn used in a filter according to the second aspect comprises less than 2% polyamide or between 3% and 15% polyamide or between 5% and 9% polyamide.

Alternatively, or in addition to the above, the yarn used in a filter according to the second aspect may comprise more than 1% acetate or between 1% and 10% acetate, or between 1 % and 6% acetate or between 2% and 4% acetate or between 1% and 2,5% acetate.

In an alternative embodiment not according to the invention the yarn comprises more than 1% viscose, or between 1% and 10% viscose or between 1% and 5% viscose or between 1% and 3% viscose.

In a preferred embodiment not according to the invention the natural fibers are made of cotton or wool or a mix or cotton and wool.

in a preferred embodiment not according to the invention of the filter the first layer closest to the surface of the core comprises at least 5 windings of the yarn, the second layer comprises at least 6 windings of the yarn and the third layer comprises at least 10 windings of the yarn and wherein two consecutive layers have been wound in accordance with different winding patterns.

In one embodiment not according to the invention each of the three layers have been wound in accordance with a winding pattern that is different from the winding pattern of the other layers. Hereby is achieved a filter wherein each layer mainly filters particles from the fluid up to a certain size. Thus, allowing a more effective utilization of the total volume of the filter for the filtering purpose.

In another embodiment not according to the invention the first layer comprises preferably less than 20 windings of the yarn. In yet another embodiment of the second aspect not according to the invention the second layer comprises less than 25 windings of the yarn, and in an even further embodiment of the second aspect not according to the invention the third layer comprises less than 35 windings of the yarn.

In a preferred embodiment not according to the invention the first layer comprises between 7 and 14 windings of the yarn. In another embodiment of the second aspect not according to the invention the second layer comprises between 8 and 14 windings of the yarn, and in yet another embodiment of the second aspect not according to the invention the third layer comprises between 14 and 24 windings of the yarn.

In order to facilitate a good flow of the fluid through the filter without applying excessive pressure, each of the three layers of the filter comprises, preferably, less than 50 - 70 windings of yarn.

One way of providing a particular winding pattern is by using a particular winding angle, and the applicant has found it advantageous if the first layer of yarn of the filter has been wound around the outer surface of the core at an angle larger than 60 degrees with respect to an axis parallel to the tubular core. In another advantageous embodiment of the second aspect not according to the invention the second layer of yarn has been wound around the outer surface of the core at an angle larger than 55 degrees with respect to an axis parallel to the tubular core, and in yet another embodiment according to the second aspect not according to the invention the third layer of yarn has been wound around the outer surface of the core at an angle larger than 50 degrees with respect to an axis parallel to the tubular core. Preferably, the angle with which the yarn has been wound around the core is different for two consecutive layers, in order to facilitate winding patterns that are able to trap particles of different sizes.

In a preferred embodiment according to any of the aspects not according to the invention the yarn has been wound around the outer surface of the core with different winding resistance in at least two of the three layers. Hereby is provided a simple way to vary the density of the yarn in the different layers. This influences the flow of the fluid through the layer and therefore the way the particles are deposited in the different layers. In a particularly preferred embodiment of any of the aspects not according to the invention the yarn of the first and third layer has been wound around the outer surface of the core with a winding resistance that is larger than the winding resistance used for the second layer. Hereby the fluid under a certain pressure will meet first a harder resistance then a lesser resistance and then again a harder resistance when passing through the flow media. This also has the effect of first slowing down, then accelerating and then slowing down again of the fluid when passing through the filtration media (layers of yarn). By a suitable adjustment of the winding resistance the filter may be designed to be particularly effective in filtering particles of a particular size from the fluid, which means that it can be optimized for a particular use, wherein particles of a certain size are a problem.

In another preferred embodiment of any of the aspects not according to the invention, the yarn of the first layer (closest to the core) has been wound around the outer surface of the core with a winding resistance that is larger than the winding resistance that used for the second layer, and wherein the yarn of the third layer has been wound around the outer surface of the core with a winding resistance that is larger than the winding resistance used for the second layer. Hereby is achieved an embodiment wherein the fluid is slowed down more and more for each layer it passes through during its flow through the filtering media (the layers of yarn).

According to a preferred embodiment of any of the aspects not according to the invention the outer surface of the tubular core is covered with a fluid permeable sheet that covers the core at least one time, the sheet being placed between the outer surface of the core and the first layer of yarn. The sheet is preferably a piece of textile, preferably a tightly woven textile.

According to an embodiment of any of the aspects not according to the invention, the filter may further comprise a housing that completely encloses the tubular core and yarn. The housing further comprises a first opening that is fluidly connected to the hollow interior of the tubular core, and a second opening that is fluidly connected to the layers of yarn. Preferably the second opening functions as a fluid inlet, and the first opening functions as a fluid outlet. Hereby is achieved a self contained unit that that may be adapted to be mounted in connection with a power transmission system, such as an engine, hydraulics, gears, valves etc. Furthermore, this self contained unit may be used as a bypass filter for providing additional filtering in already existing installations and power transmission systems. The housing is preferably made from metal.

In order to facilitate easy exchange of the filter, e.g. when it is worn out, without having to change the whole housing as well, the housing may comprise a container and a cap that is releasably attached to the container.

In one embodiment of any of the aspects not according to the invention the first opening is placed in the cap and the second opening is placed in the container, and in another embodiment not according to the invention the second opening is placed in the cap and the first opening is placed in the container.

However, in a preferred embodiment of any of the aspects not according to the invention both the first and the second openings are placed in the cap. Hereby is achieved an embodiment not according to the invention wherein the filter may be replaced in an easy manner without having to unplug one or both if the first and second openings of the housing. The container may for example just be screwed of the cap and the filter replaced. Alternatively, both the first and second opening is placed in the container.

According to an embodiment of any aspects not according to the invention the longitudinal extension of the yarn covered core is between 5 - 10 times the total radial thickness of the layers as measured from the outer surface of the tubular core. The dimensions that are chosen in any particular case may be chosen in dependence of the capacity needed, i.e. how much fluid is needed to be filtered pr. hour. For example a filter according to any aspects not according to the invention having a longitudinal extension between 24 cm and 30 cm will be suitable for filtering up to 250 - 500 l/h (liters/hour), while a filter that has a longitudinal extension between 45 cm and 60 cm will be suitable for filtering up to 1000 - 1500 l/h.

A third aspect not according to the invention pertains to a method of manufacturing a filter, where the method comprising the steps of
- mounting a tubular core with a plurality of apertures and a hollow interior, said core having an open end for fluid communication with the hollow interior, in a winding machine,
- rotating the core at a rate controlled by the winding machine. This could for example be done manually or at a pre-programmed rate,
- feeding a yarn to the core through a head in such a way that it winds onto an outer surface of the core,
- moving the head forward and backwards along the longitudinal axis of the core,
- winding a first layer of yarn onto the core comprising at least 5 windings of yarn, a second layer comprising at least 6 windings of the yarn and a third layer comprising at least 10 windings of yarn, by varying the speed of rotation of the core and/or speed of movement of the head between each layer.

The method according to the third aspect not according to the invention may further comprise the step of winding each of the three layers in accordance with pre-programmed winding patterns different from the winding patterns of the other layers.

In one embodiment not according to the invention the method according to the third aspect may further comprise the step of winding less than 20 windings of the yarn in the first layer. In another embodiment not according to the invention the method according to the third aspect may further comprise the step of winding less than 25 windings of the yarn in the second layer. In yet another embodiment not according to the invention the method according to the third aspect may further comprise the step of winding less than 35 windings of the yarn in the third layer.

In another embodiment not according to the invention the method according to the third aspect may further comprise the step of winding between 7 and 14 windings of the yarn in the first layer. In another embodiment not according to the invention the method according to the third aspect may further comprise the step of winding between 8 and 14 windings of the yarn in the second layer. In yet another embodiment not according to the invention the method according to the third aspect may further comprise the step of winding between 14 and 24 windings of the yarn of the third layer. Preferably, the method according to the third aspect not according to the invention may comprise the step winding less than 50 - 70 windings of yarn in each of the three layers.

In one embodiment not according to the invention the method according to the third aspect may further comprise the step of winding the first layer of yarn around the outer surface of the core at an angle larger than 60 degrees with respect to an axis parallel to the tubular core. In another embodiment not according to the invention the method according to the third aspect may further comprise the step of winding the second layer of yarn around the outer surface of the core at an angle larger than 55 degrees with respect to an axis parallel to the tubular core. In yet another embodiment not according to the invention the method according to the third aspect may further comprise the step of winding the third layer of yarn around the outer surface of the core at an angle larger than 50 degrees with respect to an axis parallel to the tubular core.

According to one embodiment not according to the invention of the method according to the third aspect the yarn may comprise a mix of natural and synthetic fibers. Preferably, the natural fibers are chosen from a list of fibers comprising cotton and/or wool and wherein the synthetic fibers are chosen from a list of fibers comprising any of the following materials: acryl, polyester, flax, polyamide, acetate and/or viscose.

According to a particular embodiment not according to the invention of the method according to the third aspect the yarn comprises less than 40% natural fibers. In one embodiment not according to the invention of the second aspect the yarn comprises more than 17% acryl. In another embodiment not according to the invention of the second aspect the yarn comprises more than 12% polyester, and in yet another embodiment the yarn comprises more than 12% flax.

Preferably, the yarn used in a method according to the third aspect comprises less than 2% polyamide or between 3% and 15% polyamide or between 5% and 9% polyamide.

Alternatively, or in addition to the above, the yarn used in a method according to the third aspect may comprise more than 1% acetate or between 1% and 10% acetate, or between 1 % and 6% acetate or between 2% and 4% acetate or between 1% and 2,5% acetate.

In an alternative embodiment not according to the invention of the method according to the third aspect the yarn may comprise more than 1% viscose, or between 1% and 10% viscose or between 1% and 5% viscose or between 1% and 3% viscose.

In a preferred embodiment not according to the invention of the yarn used in a method according to the third aspect, the natural fibers are made of cotton or wool or a mix or cotton and wool.

The method according to the third aspect not according to the invention may further comprise the step of varying the winding resistance of the yarn by varying the speed at which the yarn is feed through the head relative to the speed of rotation of the tubular core.

The step of winding the yarn around the outer surface of the core may in a preferred embodiment not according to the invention of the method according to the third aspect be done with different winding resistance in at least two of the three layers.

Preferably, the step of winding the yarn of the first and third layer around the outer surface of the core is performed with a winding resistance that is larger than the winding resistance used for the second layer.

In a preferred embodiment not according to the invention of the third aspect, the method may further comprise the step of winding the yarn of the first layer around the outer surface of the core with a winding resistance that is larger than the winding resistance that is used for the second layer, and winding the yarn of the second layer around the outer surface of the core with a winding resistance that is larger than the winding resistance that is used for the third layer.

In another embodiment not according to the invention of the third aspect, the method may comprise the step of covering at least in part the outer surface of the tubular core with a fluid permeable sheet, prior to the step of winding the yarn onto the core.

A forth aspect not according to the invention pertains to a method of filtering a fluid comprising the steps of:
- leading the fluid through a filter comprising at least three layers of yarn that are wound around an outer surface of a tubular core into an hollow interior of the core, wherein the first layer closest to the surface of the core comprises at least 5 windings of the yarn, the second layer comprises at least 6 windings of the yarn and the third layer comprises at least 10 windings of the yarn and wherein at least two of the at least three layers have been wound in accordance with different winding patterns.

In an embodiment not according to the invention of the forth aspect, the method may utilize a filter according to an embodiment of any of the other aspects not according to the invention.

### BRIEF DESCRIPTION OF THE DRAWINGS

A further understanding of the nature and advantages may be realized by reference to the remaining portions of the specification and the drawings. In the following, embodiments according or not according to the invention are explained in more detail with reference to the drawings, wherein
Fig. 1 shows a tubular core with a plurality of apertures,
Fig. 2 shows an embodiment not according to the invention of a filter element,
Fig. 3 shows a cross section of an embodiment not according to the invention of a filter element,
Fig. 4 shows a cross section of a filter comprising a filter element and a distillation element.
Fig. 5 shows an embodiment of a distillation element,
Fig. 6shows an embodiment of an atomizing nozzle,
Fig. 7 shows an open ventilation chamber, wherein the distillation head with a plurality of nozzles can be viewed,
Fig. 8 shows a partial longitudinal cross sectional view of an embodiment of a filter element,
Fig. 9 shows another cross sectional view of an embodiment not according to the invention of a filter element,
Fig. 10 shows a tubular core that has been placed in a winding machine,
Fig. 11 shows an embodiment not according to the invention of a method of manufacturing a filter element, and
Fig. 12 shows a flow diagram of an embodiment of a method of removing water from a petrochemical product.

### DETAILED DESCRIPTION

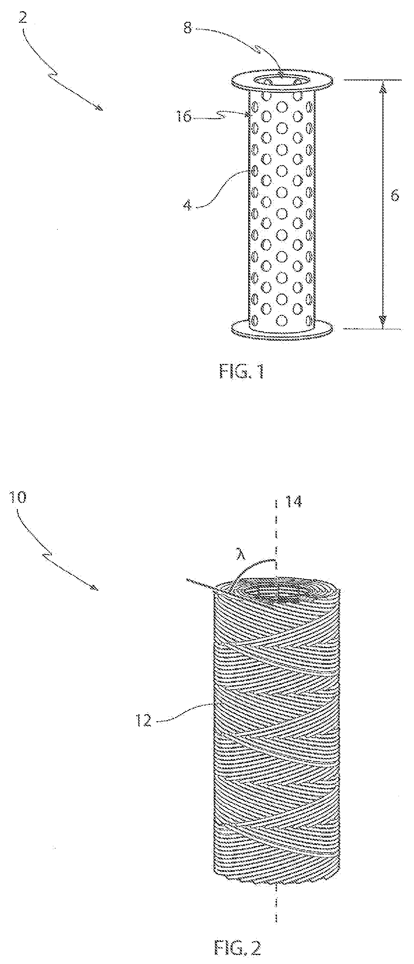

Fig. 1 shows a tubular core 2 with a plurality of apertures 4, a hollow interior 8 and a longitudinal extension indicated by the double arrow 6. The tubular core 2 has an outer surface 16 onto which a yarn may be wound. The illustrated core 2 has a generally cylindrical shape. However, other shapes could also be envisioned.

Fig. 2 shows a filter element 10. The illustrated filter element 10 comprises a tubular core 2 (not visible) as illustrated in Fig. 1 onto which a yarn 12 has been wound. The outermost layer of yarn 12 has been wound onto the tubular core 2 at an angle λ with respect to an axis 14 that is parallel with the longitudinal extension of the tubular core 2. In the illustrated case the axis 14 is the symmetry axis of the tubular core 2.

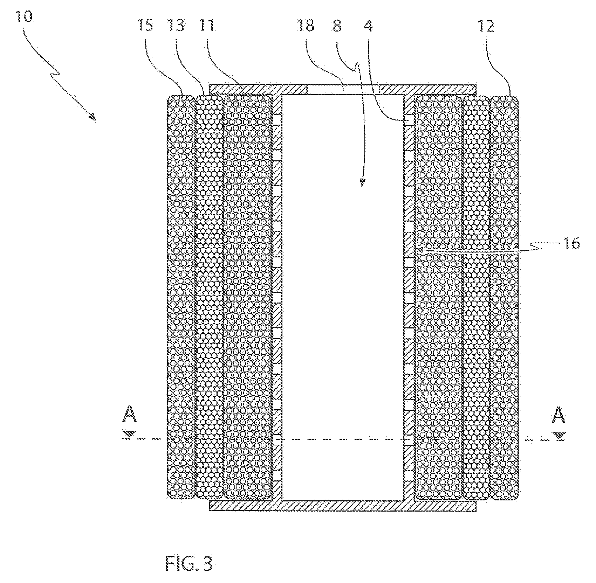

Fig. 3 shows a cross section of a filter element 10. The illustrated filter element 10 comprises a tubular core 2 with a plurality of apertures 4 and a hollow interior 8. The tubular core 2 has an open end 18 for fluid communication with the hollow interior 8. A length of yarn 12 has been wound around the outer surface 16 of the tubular core 2 in a series of three layers, 11, 13, and 15, wherein the first layer 11 closest to the outer surface 16 of the tubular core 2 comprises at least 5 windings of the yarn 12. The second layer 13 comprises at least 6 windings of the yarn 12 and the third layer 15 comprises at least 10 windings of the yarn 12. At least two consecutive layers of the three layers 11, 13 and 15 have been wound in accordance with different winding patterns.

The first layer 11 comprises preferably less than 20 windings of the yarn 12. In one embodiment not according to the invention the second layer 13 comprises less than 25 windings of the yarn 12. In another embodiment not according to the invention the third layer 15 comprises less than 35 windings of the yarn 12.

Preferably, the first layer 11 comprises between 7 and 14 windings of the yarn 12. In another embodiment not according to the invention the second layer 13 comprises between 8 and 14 windings of the yarn 12, and in yet another embodiment not according to the invention the third layer 15 comprises between 14 and 24 windings of the yarn 12.

In order to facilitate a good flow of the fluid through the filter element 10 without applying excessive pressure, each of the three layers 11, 13 and 15 comprises, preferably, less than 50 - 70 windings of yarn 12.

One way of providing a particular winding pattern in the illustrated filter element 10 is by using a particular winding angle λ. The applicant has found it advantageous if the first layer 11 of yarn 12 has been wound around the outer surface 16 of the tubular core 2 at an angle λ larger than 60 degrees with respect to an axis 14 parallel to the longitudinal extension of the tubular core 2. In another embodiment not according to the invention the second layer 13 of yarn 12 has been wound around the outer surface 16 of the tubular core 2 at an angle λ larger than 55 degrees with respect to an axis 14 parallel to the longitudinal extension of the tubular core 2, and in yet another embodiment not according to the invention the third layer 15 of yarn 12 has been wound around the outer surface 16 of the tubular core 2 at an angle λ larger than 50 degrees with respect to an axis 14 parallel to the longitudinal extension of the tubular core 2. Preferably, the angle λ with which the yarn 12 has been wound around the tubular core 2 is different for two consecutive layers 11 and 13 or 13 and 15, in order to facilitate winding patterns that are able to trap particles of different sizes.

In another (not illustrated) embodiment not according to the invention, the filter element 10 may comprise additional layers, for example the illustrated layer structure of 3 layers 11, 13 and 15 could be repeated for a suitable number of times.

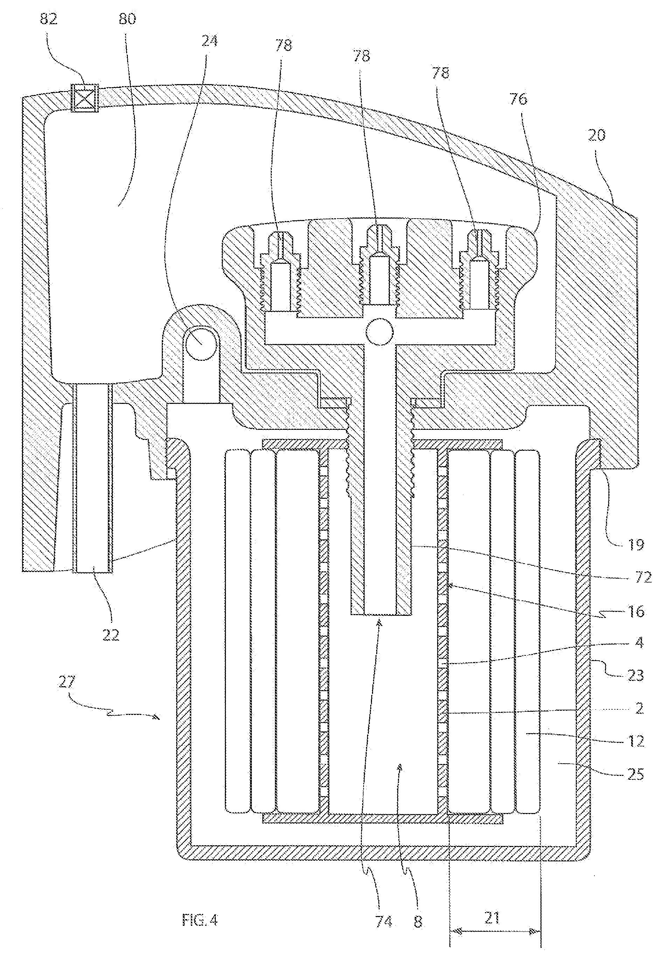

Fig. 4 shows a cross section of a filter element 10 installed in a housing The housing further comprises an inlet opening 24 that is fluidly connected to the layers (not explicitly shown) of yarn 12. The illustrated filter 27 further comprises a distillation element 70 having an inlet pipe 72 that in one end 74 is fluidly connected to a container, i.e. the housing adapted to temporarily store a petrochemical product, and in the other end being fluidly connected to a distillation head 76, said distillation head 76 comprising a plurality (only three visible) of atomizing nozzles 78 for atomizing the petrochemical product into a ventilation chamber 80. The filter 27 further comprises means for heating the petrochemical product prior to atomization by the atomizing nozzles 78, wherein the ventilation chamber 80 is connected to means for maintaining a vacuum in said ventilation chamber 80 during use of the filter 27.

By providing a plurality of atomizing nozzles 78 for atomizing the petrochemical product into the ventilation chamber 80, the petrochemical product does not percolate as a liquid into the ventilation chamber 80, but is sprayed as a mist into the ventilation chamber 80. The tiny droplets of this mist has therefore a much greater surface area than a liquid form of the petrochemical product, which implies that water contaminants much easier can evaporate from the petrochemical product. Due to the different thermodynamic properties of the petrochemical product and the contaminants, especially water and/or water borne contaminants, they react differently to changes in heat and/or pressure. Thus, when for example water contaminated petrochemical, product is dispensed into the ventilation chamber 80 as a mist of atomized droplets, the vacuum will enhance evaporation of water from the droplets. These vaporised contaminants, e.g. steam, is then vented out of the ventilation chamber, e.g. through a non-return valve 82, while the petrochemical product is drained out in liquid form through a drainage pipe 22. A plurality of atomizing nozzles 78 is used in order to ensure an adequate flow rate, and the actual number nozzles 78 needed may be chosen in dependence of the particular application of the filter 27.

Hereby is achieved a self contained filter 27 that that may be adapted to be mounted in connection with a power transmission system, such as an engine, hydraulics, gears, valves etc., which is able to remove both solid particle contaminants as well as alien liquids from the petrochemical product. Furthermore, this self contained filter 27 may be used as a bypass filter for providing additional filtering in already existing installations and power transmission systems. The housing 17 is preferably made from metal, such as Aluminium.

In order to facilitate easy exchange of the filter element 10, e.g. when it is worn out, without having to change the whole housing as well, the housing may comprise a container 23 and a cap 20 that is releasably attached to the container 23. This releasable attachment could for example be provided by the illustrated threading 19.

In the illustrated embodiment not according to the invention both the drainage pipe 22 and the inlet opening 24 are placed in the cap 20. Hereby is achieved an embodiment not according to the invention wherein the filter element 10 and/or distillation element 70 may be replaced in an easy manner without having to unplug one or both if the drainage pipe 22 and inlet opening 24 of the housing. The container 23 may for example just be screwed of the cap 20 and the filter element 10 replaced.

According to an embodiment not according to the invention the longitudinal extension 6 of the yarn 12 covered tubular core 2 is between 5 - 10 times the total radial thickness 21 of the layers as measured from the outer surface 16 of the tubular core 2. The dimensions that are chosen in any particular case may be chosen in dependence of the capacity needed, i.e. how much fluid is needed to be filtered pr. hour. For example a filter 10 having a longitudinal extension 6 between 24 cm and 30 cm will be suitable for filtering up to 250 - 500 l/h (liters/hour), while a filter 10 that has a longitudinal extension 6 between 45 cm and 60 cm will be suitable for filtering up to 1000 - 1500 l/h.

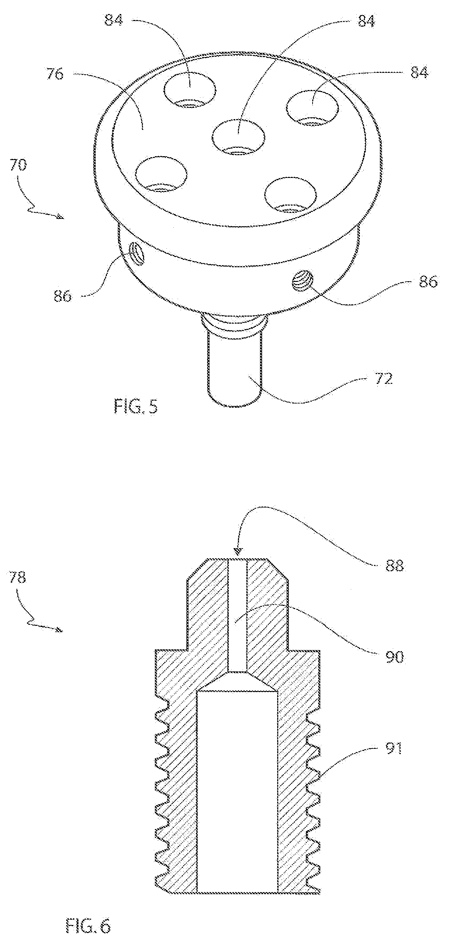

When a fluid, for example a petrochemical fluid such as oil enters the housing through the inlet opening 24 in the cap 20 of the housing it will flow into the hollow interior 25 of the container 21. The fluid will then flow through the through the layers (not illustrated explicitly) of yarn 12 along the total radial thickness 21 of the yarn 12 and into the hollow interior 8 of the tubular core 2 via the apertures 4. During its flow through the layers (not explicitly illustrated in this figure, but see for example figure 3 and 6) of yarn 12, particles present in the fluid are deposited in the layers of yarn 12. From the hollow interior 8 of the tubular core 2 the petrochemical fluid will flow into the inlet pipe 72 of the distillation element and atomize through the nozzles 78 into the ventilation chamber 80 and eventually be drained out of the filter 27 through the drainage pipe 22.

Preferably, the vacuum in the ventilation chamber 80 corresponds to a pressure of below 0.95 bar, preferably below 0.75 bar or between 0.5 bar and 0.95 bar.

Fig. 5 shows a perspective view of a distillation element 70, comprising five bores 84 for the atomizing nozzles 78. The bores 84 are situated in the distillation head 76. In the distillation head 76 there are also provided a plurality of bores 86 for electrical heating elements (not shown). These electrical heating elements are used to heat the distillation element 70 and thereby the petrochemical product that flows through it prior to being atomized through the atomizing nozzles 78. In a preferred embodiment the petrochemical product is heated to between 70 degrees Celsius and 100 degrees Celsius prior to atomization by the atomizing nozzles 78, preferably between 90 degrees Celsius and 100 degrees Celsius prior to atomization by the atomizing nozzles 78. Hereby is achieved that the eventual water within the petrochemical product is close to or at its bolling temperature, which implies that it easier evaporates from the atomized droplets when injected into the ventilation chamber 80. Moreover a larger quantity of contaminants, e.g. water will evaporate from the droplets. The pipe 72 and distillation head 76 are made from a metal or metal alloy comprising aluminium, which has good heat conductivity and low reactivity with petrochemical products, such as oil.

Advantageously, the filter 27 may further comprise thermostats (not shown) operatively connected to the pipe 72 and distillation head 76 and the heating means (not shown). Hereby is achieved that the petrochemical product may be heated to the desired temperature without the application of too much energy for heating.

Fig. 6 illustrates a cross section of an embodiment of a nozzle 78. The nozzles 78 have nozzle openings 88 that are between 0.5 mm and 3 mm, more preferably between 0.7 and 1.2 mm. Atomization is achieved by selecting a nozzle opening size that creates a significant pressure differential across the opening 88. The viscosity of petrochemical products, such as engine oil is largely dependent of temperature, so the nozzle sizes are preferably chosen in dependence of the applied temperature and the type of petrochemical product to be filtered. To this end the applicant estimates that by using nozzle opening sizes as mentioned above it would be possible to atomize most types of petrochemical oils.

However, there is a delicate balance in selecting proper nozzle opening sizes, because the opening size controls both the extent of atomization and the flow rate through the filter 27. Selection of the nozzle opening 88 also controls the pressure differential between the container 21 and the ventilation chamber 80.

The nozzles 78 have a barrel 90 that is rifled in order to thereby impart a rotational motion to the mist of droplets generated by the nozzle 78 and thereby enhance the separation (evaporation) of contaminants from them.

The length of the barrel 90 of each of the nozzles 88 is between 20 mm and 40 mm. Furthermore the nozzles 78 are equipped with a threading 91 for fixing them in the bores 84 of the distillation head 76.

The technical industries have particular difficulties with water contaminants in petrochemical products for lubrication and different transmissions or transformers (hydraulics, gears, valves etc.). These contaminants mainly consists of water (e.g. from condensation, leaks, frost, etc.). Non combusted fuel remnants, acids and eventually other alien liquids can also be present. Acids may be formed in the presence of water. The filter is especially configured to remove water or water borne contaminants.

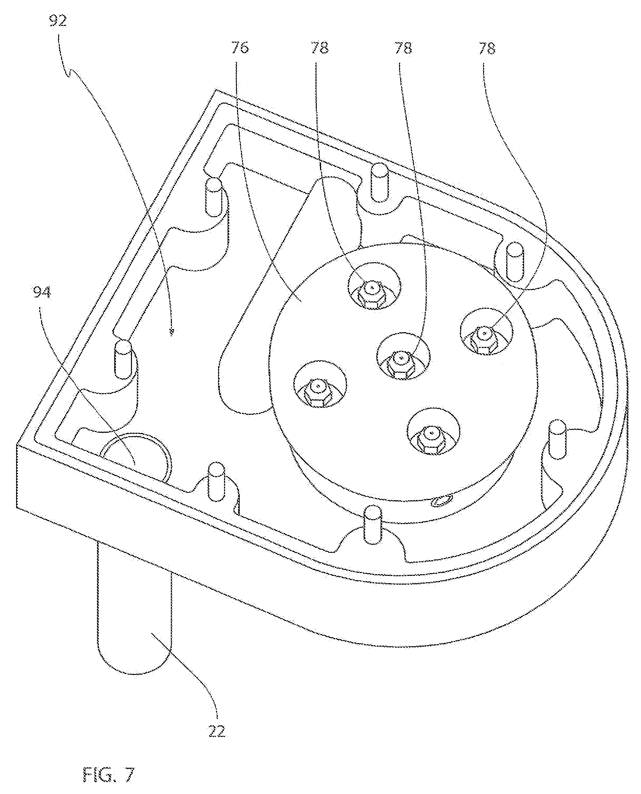

Fig. 7 shows a perspective view of an "open" ventilation chamber 80, wherein the distillation head 76 with five nozzles 78 can be seen. The ventilation chamber 80 has a sloped floor 92 with a drain 94 for leading the petrochemical product to the drainage pipe 22. During proper use of the filter 27, the drain 94 is configured to be situated at the lowest place of the floor 80. Hereby is achieved that the petrochemical product - relieved form most of the, e.g. water, contaminants - may be drained from the bottom of the ventilation chamber 80, while the gaseous phase, e.g. steam, is vented out from an upper part of the ventilation chamber through a non-return valve 82. Here the terms "lower" and "upper" refers to the lower and upper parts of the ventilation chamber 80, when the filter 27 is installed in its correct use position.

Advantageously, the petrochemical product is pressurized, e.g. to a pressure of between 2 bar and 6 bar, before it atomized through the nozzles 78.

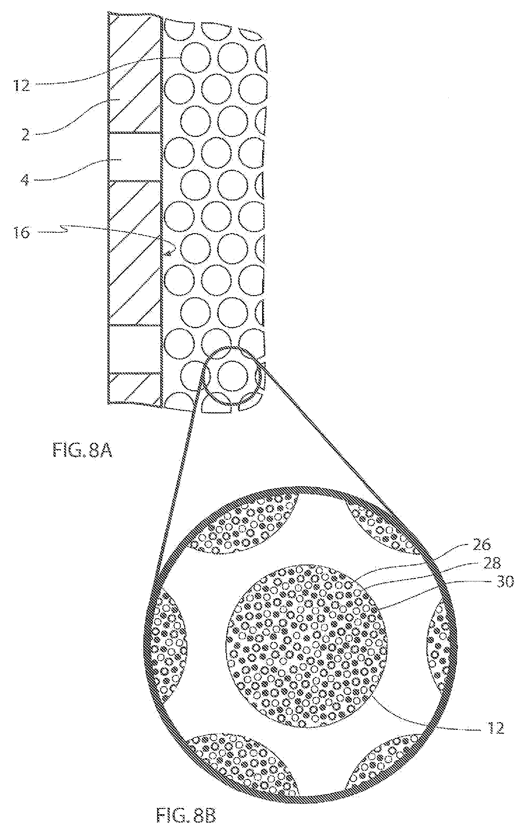

Fig. 8 shows a partial longitudinal cross sectional view of an embodiment not according to the invention of a filter element 10. Illustrated is a part of the tubular core 2 having a number of apertures 4. Around the outer surface 16 of the tubular core 2 is wound a yarn 12 in a number of layers (not illustrated), wherein only the first two windings of the first layer is illustrated.

The yarn 12 comprises a number of fibers 26, 28 and 30 (of which only three have been given designation numbers in order to increase the intelligibility of the figure).

Preferably, the yarn 12 comprises a mix of natural and synthetic fibers. For example in the illustrated embodiment not according to the invention the fibers 26 and 30 may be natural, while the fiber 28 may be synthetic. Since natural fibers 26 and 30 are hydrophilic, while synthetic fibers 28 generally are hydrophobic, a filter element 10 wherein the yarn 12 is made of a mix of both natural (26 and 30) and synthetic (28) fibers has the additional advantage that in addition to being able to filter particles from the fluid, also water may be absorbed by the yarn 12 and thereby filtered from the fluid without having to heat the filter.

In an embodiment not according to the invention the natural fibers 26 and 30 are chosen from a list of fibers comprising cotton and/or wool and the synthetic fibers (28) are chosen from a list of fibers comprising any of the following materials: acryl, polyester, flax, polyamide, acetate and/or viscose. Cotton and wool are cheap natural fibers that are easy to mix with any or a plurality of the synthetic fibers mentioned above. Thus facilitating an effective, yet cheap yarn 12 for the filter element 10.

in one embodiment not according to the invention the yarn 12 comprises less than 40% natural fibers. In another embodiment not according to the invention the yarn 12 comprises more than 17% acryl. In yet another embodiment not according to the invention the yarn 12 comprises more than 12% polyester, and in yet even another embodiment not according to the invention the yarn 12 comprises more than 12% flax.

Preferably, the yarn 12 comprises less than 2% polyamide or between 3% and 15% polyamide or between 5% and 9% polyamide.

Alternatively, or in addition to the above, the yarn 12 may comprise more than 1% acetate or between 1% and 10% acetate, or between 1 % and 6% acetate or between 2% and 4% acetate or between 1% and 2,5% acetate.

In an alternative embodiment not according to the invention the yarn 12 comprises more than 1% viscose, or between 1% and 10% viscose or between 1% and 5% viscose or between 1% and 3% viscose.

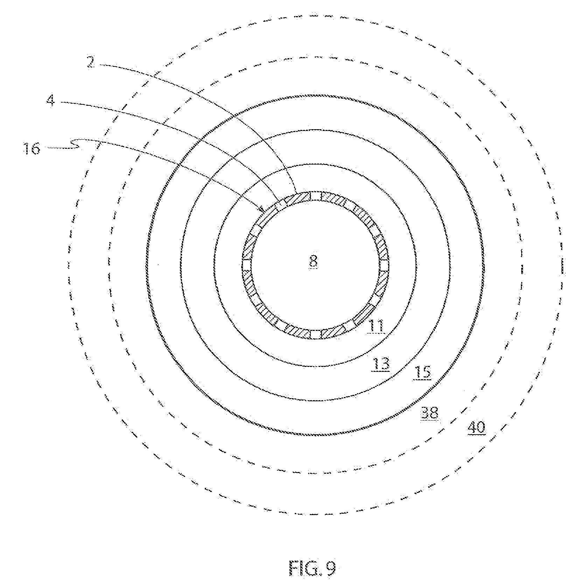

Fig. 9 shows a filter element 10 as illustrated in Fig. 3 cut along the dashed line A in order to illustrate the layered structure of yarn 12 more clearly. Illustrated is the tubular core 2 with a number of apertures 4 and a hollow interior 8. Around the outer surface 18 of the tubular core 2 is illustrated the first layer 11 of yarn that has been wound around the tubular core 2 in accordance with a particular winding pattern. Also illustrated is the second 13 and third 15 layer of yarn 12. In addition to these layers 11, 13 and 15 additional layers may be provided in alternative embodiments not according to the invention as is illustrated by the layers 38 and 40.

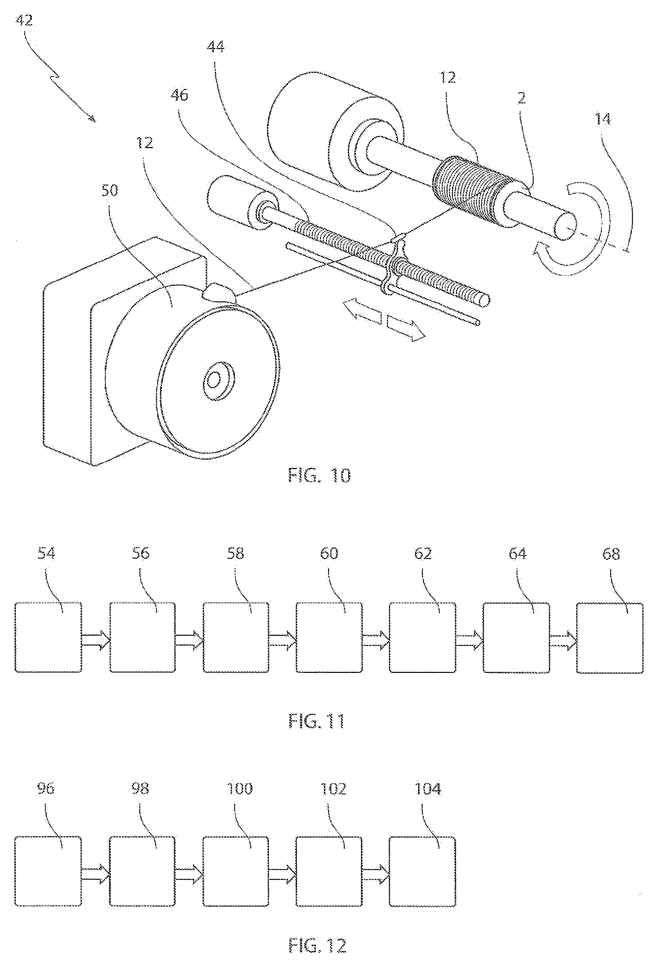

Fig. 10 shows a tubular core 2 that has been placed in a winding machine 42. The tubular core 2 is rotated with respect to the axis 14, while the yarn 12 is fed through a head 44 to the tubular core 2. The rotation of the tubular core 2 may be manually controlled, but is preferably automatically controlled by the winding machine 42 or a computer (not illustrated) controlling the winding machine 42. Meanwhile the head 44 is moved back and forth (as illustrated by the double arrow) on the rail 46 parallel to the axis 14 at a controlled rate. By varying the speed of the head 44 along the rail and/or rotation of the tubular core 2 with respect to the axis 14 varying winding patterns may be produced. In particular a layered structure of yarn 12 with a certain number of windings of the yarn 12 and a certain winding pattern for each or some of the layers may be provided for. In the illustrated embodiment not according to the invention the yarn 12 is provided from a yarn supply 50 holding a larger quantity of yarn 12.

In an embodiment not according to the invention of any of the filter elements 10 illustrated in any of the figures 2 - 4, 8 and 9 the yarn 12 has been wound around the outer surface 16 of the core 2 with different winding resistance in at least two of the three layers (11, 13, and 15). Hereby is provided a simple way to vary the density of the yarn 12 in the different layers 11, 13 and 15. This influences the flow of the fluid through the layers and therefore the way the particles are deposited in the different layers. In a particularly preferred embodiment not according to the invention the yarn 12 of the first 11 and third 15 layer has been wound around the outer surface 16 of the core 2 with a winding resistance that is larger than the winding resistance used for the second layer 13. Hereby the fluid under a certain pressure will meet first a harder resistance then a lesser resistance and then again a harder resistance when passing through the filter media (the layers of yarn 12). This also has the effect of first slowing down, then accelerating and then slowing down again of the fluid when passing through the filtration media (layers of yarn 12). By a suitable adjustment of the winding resistance the filter 10 may be designed to be particularly effective in filtering particles of a particular size from the fluid, which means that it can be optimized for a particular use, wherein particles of a certain size are a problem.

The winding resistance may be adjusted by varying the speed at which the yarn 12 is fed through the head 44 relative to the speed of rotation of the tubular core with respect to the axis 14. This adjustment of the winding resistance is preferably automatically controlled by the winding machine 42.

In another embodiment not according to the invention of any of the filter elements 10 illustrated in any of the figures 2 - 4, 8 and 9, the yarn 12 of the first layer 11 (closest to the core 2) has been wound around the outer surface 16 of the core 2 with a winding resistance that is larger than the winding resistance used for the second layer 13, and wherein the yarn 12 of the third layer 15 has been wound around the outer surface 16 of the core 2 with a winding resistance that is larger than the winding resistance used for the second layer 13. Hereby is achieved an embodiment not according to the invention wherein the fluid is slowed down more and more for each layer it passes through during its flow through the filtering media (the layers of yarn 12).

While it has not been illustrated in any of the figures, the outer surface 16 of the tubular core 12 illustrated in any of the figures may also be covered with a fluid permeable sheet that covers the outer surface 16 of the tubular core 2 at least one time. The sheet, thus being placed between the outer surface 16 of the core 2 and the first layer 11 of yarn 12. The sheet is preferably a piece of textile, preferably a tightly woven textile.

In the following more specific examples of filter elements 10 are given, wherein

### EXAMPLE 1

In an embodiment not according to the invention of a filter element 10 as illustrated in any of the figures 2-4 and 8, the first layer 11 comprises 10 - 14 windings of the yarn 12 that has been wound onto the tubular core 2 at an angle λ of 72 degrees (both ways), the second layer 13 comprises 12 - 14 windings of the yarn 12 that has been wound onto the tubular core 2 at an angle λ of 68 degrees (both ways) and wherein the third layer 15 comprises 21 - 24 windings of the yarn 12 that has been wound onto the tubular core 2 at the angle λ of 69 degrees. Specifically in the above mentioned embodiment of the filter element 10, the first layer 11 may comprise 12 windings of the yarn 12, the second layer 13 may comprise 14 windings of the yarn 12 and the third layer 15 may comprise 23 windings of the yarn 12. Investigations have shown that a filter 10 according to this specific example 1 is particularly well suited for filtering particles having a diameter or average particle size of 0.5 µm - 50 µm from a petrochemical fluid such as oil, e.g. engine oil. A filter 10 according to this example 1 with a longitudinal length of 45 - 60 cm has the capacity of filtering up to 1000 L/h-1500 L/h of fluid.

### EXAMPLE 2

In another embodiment not according to the invention, of a filter element 10 as illustrated in any of the figures 2 - 4, 8 and 9, the yarn 12 comprises a mixture of fibers made from: 5% - 15% cotton, 29% - 35% acryl, 15% - 16% flax, 32% - 37% polyester, 5% - 6% polyamide and 2.5% - 4% acetate. For example 10% cotton, 32% acryl, 16% flax, 34% polyester, 5% polyamide and 3% acetate.

### EXAMPLE 3

In yet another embodiment not according to the invention of a filter element 10 as illustrated in any of the figures 2 - 4, 8 and 9, the layered structure of example 1 is used in combination with the composition of the yarn 12 used in example 2. Investigations have shown that a filter 10 according to this specific example 3 is even better suited for filtering particles having a diameter or average particle size of 0.5 µm - 50 µm from a petrochemical fluid such as oil, e.g. engine oil. A filter element 10 according to this example 3 with a longitudinal length of 45 - 60 cm has the capacity of filtering up to 1000 L/h - 1500 L/h of fluid.

### EXAMPLE 4

In an embodiment not according to the invention of a filter element 10 as illustrated in any of the figures 2-4, 8 and 9, the first layer 11 comprises more than 6 windings of the yarn 12 that has been wound onto the tubular core 2 at an angle λ of 72 degrees (both ways), the second layer 13 comprises more than 7 windings of the yarn 12 that has been wound onto the tubular core 2 at an angle λ of 65 degrees (both ways) and wherein the third layer 15 comprises more than 13 windings of the yarn 12 that has been wound onto the tubular core 2 at the angle λ of 68 degrees. Specifically in the above mentioned embodiment of the filter element 10, the first layer 11 may comprise 7 windings of the yarn 12, the second layer 13 may comprise 8 windings of the yarn 12 and the third layer 15 may comprise 14 windings of the yarn 12. investigations have shown that a filter element 10 according to this specific example 4 is particularly well suited for filtering particles having a diameter or average particle size of 0.5 µm - 40 µm from a petrochemical fluid such as oil, e.g. engine oil. A filter element 10 according to this example 4 with a longitudinal length of 24 - 30 cm has the capacity of filtering up to 250 L/h - 500 L/h fluid.

### EXAMPLE 5

In another embodiment not according to the invention of a filter element 10 as illustrated in any of the figures 2 - 4, 8 and 9, the yarn 12 comprises a mixture of fibers made from: 29% - 37% cotton, 17% - 25% acryl, 12% - 13% flax, 15% - 30% polyester, 3% - 4% polyamide, 1% - 2% acetate and 1% - 2% viscose. For example 35% cotton, 22% acryl, 12% flax, 25% polyester, 3% polyamide, 1% acetate and 2% viscose.

### EXAMPLE 6

In yet another embodiment not according to the invention of a filter element 10 as illustrated in any of the figures 2 - 4, 8 and 9, the layered structure of example 4 is used in combination with the composition of the yarn 12 used in example 5. Investigations have shown that a filter element 10 according to this specific example 6 is even better suited for filtering particles having a diameter or average particle size of 0.5 µm - 40 µm from a petrochemical fluid such as oil, e.g. engine oil. A filter element 10 according to this example 3 with a longitudinal length of 24 - 30 cm has the capacity of filtering up to 250 L/h-500 L/h of fluid.

Fig. 11 shows a flow diagram of a method of manufacturing a filter element 10 illustrated in any of the figures 2 - 4, 8 and 9, where the method comprises the steps of
- mounting the tubular core 2 with a plurality of apertures 4 and a hollow interior 8 in a winding machine 42, as indicated by the block 54,
- rotating the core 2 at a rate controlled by the winding machine 42, as indicated by the block 56. This step 56 could for example be done manually or at a pre-programmed rate,
- feeding a yarn 12 to the core 2 through a head 44 in such a way that it winds onto an outer surface 16 of the core 2, as indicated by the block 58.
- moving the head 44 forward and backwards along the longitudinal axis 14 of the core 2, as indicated by the block 60.
- winding a first layer 11 of yarn 12 onto the core 2 comprising at least 5 windings of yarn 12, as indicated by the block 62,
- winding a second layer 13 of yarn 12 onto the core 2 comprising at least 6 winding of the yarn 12, as indicated by the block 64, and
- winding a third layer 15 of yarn onto the core 2 comprising at least 10 windings of yarn 12, as indicated by the block 68. The speed of rotation of the core 2 and/or speed of movement of the head 44 is varied between each layer 11, 13 and 15, i.e. between each of the steps 62, 64 and 68.

The method illustrated by the flow diagram in Fig. 11 may further comprise the step of varying the winding resistance of the yarn 12 by varying the speed at which the yarn 12 is feed through the head 44 relative to the speed of rotation of the tubular core 2 with respect to the axis 14.

Fig. 12 shows a flow diagram of a method for removing water from a petrochemical product, the method comprising the following steps:
- heating the petrochemical product, as indicated by the block 96,
- generating a vacuum in a ventilation chamber 80, as indicated by the block 98,
- injecting the petrochemical product into the ventilation camber 80 through a plurality of atomizing nozzles 78, whereby the petrochemical product is atomized when entering the ventilation chamber 80, as indicated by the block 100,
- removing a part of a gaseous phase of the alien liquid from the ventilation chamber 80, as indicated by the block 102, and
- draining a liquid phase of the petrochemical product from the ventilation chamber 80, as indicated by the block 104.

### LIST OF REFERENCES

In the following is given a list of reference numbers used in the detailed description of the invention.
- 2: tubular core,
- 4: apertures in the tubular core,
- 6: longitudinal extension of the tubular core,
- 8: hollow interior of the tubular core,
- 10: filter element,
- 11: first layer of yarn,
- 12: yarn,
- 13: second layer of the yarn,
- 14: longitudinal axis of the tubular core.
- 15: third layer of the yarn,
- 16: outer surface of the tubular core,
- 18: open end of tubular core,
- 19: threading,
- 20: cap,
- 21: total radial thickness of the yarn,
- 22: drainage pipe,
- 23: container,
- 24: inlet opening,
- 25: hollow interior of the container,
- 26: natural fiber,
- 27: filter,
- 28: synthetic fiber,
- 30: natural fiber,
- 38: additional optional layer of yarn,
- 40: additional optional layer of yarn,
- 42: winding machine,
- 44: head,
- 46: rail,
- 50: yarn supply,
- 54 - 68: method steps,
- 70: distillation element,
- 72: inlet pipe of distillation element,
- 74: open end of pipe of the distillation, element,
- 76: distillation head,
- 78: atomizing nozzle,
- 80: ventilation chamber,
- 82: non-return value,
- 84: bores in the distillation, head for nozzles,
- 86: bores is the distillation head for heating elements,
- 88: nozzle opening,
- 90: barrel of nozzle,
- 91: nozzle threading,
- 92: floor of ventilation chamber,
- 94: drain in the floor of the distillation chamber, and
- 96 - 104: method steps.

## Claims

1. A filter for the removal of water from a petrochemical product, the filter comprising a distillation element, a container adapted to temporarily store the petrochemical product, and a ventilation chamber, the distillation element comprising a distillation head, and having an inlet pipe that in one end is fluidly connected to the container and in the other end is fluidly connected to the distillation head, said distillation head comprising a plurality of atomizing nozzles for atomizing the petrochemical product into the ventilation chamber, the ventilation chamber being connected to means for maintaining a vacuum in said ventilation chamber during use of the filter **characterized in that** the nozzles have a rifled barrel that has a length of between 20 mm and 40 mm and nozzle openings that are between 0.5 mm and 3 mm in diameter, and wherein the pipe and distillation head is made from a metal or metal alloy comprising aluminium, said pipe comprising means for heating the petrochemical product prior to atomization by the atomizing nozzles.

2. A filter according to claim 1, wherein the vacuum in the ventilation chamber, during use of the filter, corresponds to a pressure of below 0.95 bar, preferably below 0.75 bar or between 0.5 bar and 0.95 bar.

3. A filter according to claim 1 or 2, wherein the petrochemical product, during use of the filter, is heated to between 70 degrees Celsius and 100 degrees Celsius prior to atomization by the atomizing nozzles, preferably between 90 degrees Celsius and 100 degrees Celsius prior to atomization by the atomizing nozzles.

4. A filter according to any of the preceding claims, further comprising thermostats operatively connected to the pipe and distillation head and the heating means.

5. A filter according to any of the preceding claims, wherein the ventilation chamber has a sloped floor with a drain that during use is configured to be situated at the lowest place of the floor.

6. A filter according to any of the preceding claims, wherein the petrochemical product, during use of the filter, is pressurized before it is atomized through the nozzles.

7. A method for removing water from a petrochemical product, the method comprising the following steps:
- heating the petrochemical product by leading it through a heated inlet pipe, which is made from a metal or metal alloy comprising aluminium and further into a heated distillation head, which is also made from a metal or metal alloy comprising aluminium, and which is fluidly connected to the inlet pipe,
- generating a vacuum in a ventilation chamber,
- atomizing the petrochemical product, by injecting it into the ventilation chamber through a plurality of atomizing nozzles having a opening diameter between 0.5 mm and 3 mm, each having a rifled barrel having a length between 20 mm and 40 mm for imparting a rotational movement to the petrochemical product that is injected into the ventilation chamber through said nozzles,
- removing a part of a gaseous phase of water from the ventilation chamber, and
- draining a liquid phase of the petrochemical product from the ventilation chamber.

8. The method according to claim 7, wherein the step of removing a part of a gaseous phase of the water from the ventilation chamber comprises the step of ventilating said gaseous phase of the alien liquid out of the chamber through a non-return valve.

9. The method according to claim 7 or 8, wherein the step of generating a vacuum within the ventilation chamber comprises the sub step of generating a pressure of below 0.95 bar, preferably below 0.75 bar or between 0.5 bar and 0.95 bar within the ventilation chamber.

10. The method according to any of the claims 7, 8 or 9, wherein the step of heating the petrochemical product comprises the sub step of heating the petrochemical product to between 70 degrees Celsius and 100 degrees Celsius prior to atomization by the atomizing nozzles, preferably between 90 degrees Celsius and 100 degrees Celsius prior to atomization by the atomizing nozzles.

11. The method according to any of the claims 7 - 10, wherein the petrochemical product is pressurized to a pressure of between 2 bar to 6 bar before injecting it into the ventilation camber through the plurality of atomizing nozzles.

## Patentansprüche

1. Filter zum Entfernen von Wasser aus einem petrochemischen Produkt, wobei der Filter ein Destillationselement umfasst, einen Behälter, der angepasst ist, das petrochemische Produkt zeitweilig zu lagern, und eine Belüftungskammer, wobei das Destillationselement einen Destillationskopf umfasst, und ein Einlassrohr aufweist, das an einem Ende mit dem Behälter in Fluidverbindung steht und an dem anderen Ende mit dem Destillationskopf in Fluidverbindung steht, wobei der Destillationskopf eine Mehrzahl von Zerstäuberdüsen zum Atomisieren des petrochemischen Produkts in die Belüftungskammer umfasst, wobei die Belüftungskammer mit einer Vorrichtung zum Aufrechterhalten eines Vakuums in der Belüftungskammer bei der Verwendung des Filters verbunden ist, **dadurch gekennzeichnet, dass** die Düsen einen gezogenen Lauf aufweisen, der eine Länge von zwischen 20 mm und 40 mm hat, und Düsenöffnungen, die einen Durchmesser von zwischen 0,5 mm und 3 mm haben, wobei das Rohr und der Destillationskopf aus einem Metall oder einer Metalllegierung umfassend Aluminium hergestellt sind, wobei das Rohr eine Vorrichtung zum Erhitzen des petrochemischen Produkts vor dem Atomisieren durch die Zerstäuberdüsen umfasst.

2. Filter nach Anspruch 1, wobei das Vakuum in der Belüftungskammer, bei der Verwendung des Filters, einem Druck von kleiner als 0,95 bar, bevorzugt kleiner als 0,75 bar oder zwischen 0,5 bar und 0,95 bar entspricht.

3. Filter nach Anspruch 1 oder 2, wobei das petrochemische Produkt, bei der Verwendung des Filters, auf zwischen 70 Grad Celsius und 100 Grad Celsius vor dem Atomisieren durch die Zerstäuberdüsen, bevorzugt zwischen 90 Grad Celsius und 100 Grad Celsius vor dem Atomisieren durch die Zerstäuberdüsen erhitzt wird.

4. Filter nach einem der vorherstehenden Ansprüche, ferner umfassend Thermostaten, die mit dem Rohr und dem Destillationskopf und der Heizvorrichtung in Werkverbindung stehen.

5. Filter nach einem der vorherstehenden Ansprüche, wobei die Belüftungskammer einen schräg verlaufenden Boden mit einem Ablauf aufweist, der bei der Verwendung dazu eingerichtet ist, an der untersten Stelle des Bodens angeordnet zu sein.

6. Filter nach einem der vorherstehenden Ansprüche, wobei das petrochemische Produkt, bei der Verwendung des Filters, unter Druck gesetzt wird, bevor es durch die Düsen atomisiert wird.

7. Verfahren zum Entfernen von Wasser aus einem petrochemischen Produkt, wobei das Verfahren die folgenden Schritte umfasst:
- Erhitzen des petrochemischen Produkts durch Führen desselben durch ein erhitztes Einlassrohr, das aus einem Metall oder einer Metalllegierung umfassend Aluminium hergestellt ist, und ferner in einen erhitzten Destillationskopf, der ebenfalls aus einem Metall oder einer Metalllegierung umfassend Aluminium hergestellt ist, und der mit dem Einlassrohr in Fluidverbindung steht,
- Erzeugen eines Vakuums in einer Belüftungskammer,
- Atomisieren des petrochemischen Produkts, durch Einspritzen desselben in die Belüftungskammer durch eine Mehrzahl von Zerstäuberdüsen, die einen Öffnungsdurchmesser von zwischen 0,5 mm und 3 mm haben, wobei jede einen gezogenen Lauf mit einer Länge von zwischen 20 mm und 40 mm zum Erzeugen einer Drehbewegung zugeführt an das petrochemische Produkt aufweist, das in die Belüftungskammer durch die Düsen eingespritzt wird,
- Entfernen eines Teils einer gasförmigen Phase von Wasser aus der Belüftungskammer, und
- Dränieren einer flüssigen Phase des petrochemischen Produkts aus der Belüftungskammer.

8. Verfahren nach Anspruch 7, wobei der Schritt des Entfernens eines Teils einer gasförmigen Phase des Wassers aus der Belüftungskammer den Schritt des Belüftens der gasförmigen Phase der Fremdflüssigkeit aus der Kammer durch ein Rückschlagventil umfasst.

9. Verfahren nach Anspruch 7 oder 8, wobei der Schritt des Erzeugens eines Vakuums innerhalb der Belüftungskammer den Unterschritt des Erzeugens eines Drucks von kleiner als 0,95 bar, bevorzugt kleiner als 0,75 bar oder zwischen 0,5 bar und 0,95 bar innerhalb der Belüftungskammer umfasst.

10. Verfahren nach einem der vorherstehenden Ansprüche 7, 8 oder 9, wobei der Schritt des Erhitzens des petrochemischen Produkts den Unterschritt des Erhitzens des petrochemischen Produkts auf zwischen 70 Grad Celsius und 100 Grad Celsius vor dem Atomisieren durch die Zerstäuberdüsen, bevorzugt zwischen 90 Grad Celsius und 100 Grad Celsius vor dem Atomisieren durch die Zerstäuberdüsen umfasst.

11. Verfahren nach einem der vorherstehenden Ansprüche 7 - 10, wobei das petrochemische Produkt unter einem Druck von zwischen 2 bar bis 6 bar gesetzt wird, bevor es in die Belüftungskammer durch die Mehrzahl von Zerstäuberdüsen eingespritzt wird.

## Revendications

1. Filtre pour l'élimination de l'eau d'un produit pétrochimique, le filtre comprenant un élément de distillation, un récipient adapté pour emmagasiner temporairement le produit pétrochimique, et une chambre de ventilation, l'élément de distillation comprenant une tête de distillation, et ayant un tuyau d'admission qui à une extrémité est lié de manière fluide au récipient, et qui. à l'autre extrémité, est lié de manière fluide à la tête de distillation, ladite tête de distillation comprenant une pluralité de buses d'atomisation pour atomiser le produit pétrochimique dans la chambre de ventilation, la chambre de ventilation étant liée à des moyens pour maintenir un vide dans ladite chambre de ventilation pendant l'utilisation du filtre, **caractérisé en ce que** les buses ont un canon rayé qui est d'une longueur d'entre 20 mm et 40 mm et des ouvertures de buse qui font entre 0,5 mm et 3 mm de diamètre, et où le tuyau et la tête de distillation sont faits d'un métal ou d'un alliage métallique comprenant de l'aluminium, ledit tuyau comprenant des moyens pour chauffer le produit pétrochimique préalablement à l'atomisation par les buses d'atomisation.

2. Filtre selon la revendication 1, dans lequel le vide dans la chambre de ventilation, pendant l'utilisation du filtre, correspond à une pression en dessous de 0,95 bar, préférablement en dessous de 0,75 bar ou entre 0,5 bar et 0,95 bar.

3. Filtre selon l'une quelconque des revendications 1 ou 2, dans lequel le produit pétrochimique, pendant l'utilisation du filtre, est chauffé à entre 70 degrés Celsius et 100 degrés Celsius préalablement à l'atomisation par les buses d'atomisation, préférablement entre 90 degrés Celsius et 100 degrés Celsius préalablement à l'atomisation par les buses d'atomisation.

4. Filtre selon l'une quelconque des revendications précédentes, comprenant en outre des thermostats liés de manière opératif au tuyau et à la tête de distillation et aux moyens de chauffage.

5. Filtre selon l'une quelconque des revendications précédentes, dans lequel la chambre de ventilation a un sol en pente avec un drainage qui, pendant l'utilisation, est configuré pour être situé à l'endroit le plus bas du sol.

6. Filtre selon l'une quelconque des revendications précédentes, dans lequel le produit pétrochimique, pendant l'utilisation du filtre, est pressurisé avant d'être atomisé par les buses.

7. Procédé pour éliminer de l'eau d'un produit pétrochimique, le procédé comprenant les étapes suivantes:
- chauffer le produit pétrochimique en le conduisant par un tuyau d'admission chauffé qui est fait d'un métal ou d'un alliage métallique comprenant de l'aluminium et encore au dedans une tête de distillation, qui est également faite d'un métal ou un alliage métallique comprenant de l'aluminium, et qui est liée de manière fluide au tuyau d'admission,
- générer un vide dans une chambre de ventilation,
- atomiser le produit pétrochimique en l'injectant dans une chambre de ventilation à travers une pluralité de buses d'atomisation ayant un diamètre d'ouverture entre 0,5 mm et 3 mm, chacune ayant un canon rayé ayant une longueur entre 20 mm et 40 mm pour transmettre un mouvement de rotation au produit pétrochimique qui est injecté dans la chambre de ventilation à travers les buses,
- éliminer une partie d'une phase gazeuse d'eau de la chambre de ventilation, et
- drainer une phase liquide du produit pétrochimique de la chambre de ventilation.

8. Procédé selon la revendication 7, dans lequel l'étape d'élimination d'une partie d'une phase gazeuse de l'eau à partir de la chambre de ventilation comprend l'étape de ventiler ladite phase gazeuse du liquide étranger en dehors de la chambre par un clapet de non-retour.

9. Procédé selon la revendication 7 ou la revendication 8, dans lequel l'étape de générer un vide à l'intérieur de la chambre de ventilation comprend la sous-étape de générer une pression en dessous de 0,95 bar, de préférence en dessous de 0,75 bar ou entre 0,5 bar et 0,95 bar à l'intérieur de la chambre de ventilation.

10. Procédé selon l'une quelconque des revendications 7, 8 ou 9, dans lequel l'étape de chauffer le produit pétrochimique comprend la sous-étape de chauffer le produit pétrochimique à entre 70 degrés Celsius et 100 degrés Celsius préalablement à l'atomisation par les buses d'atomisation, préférablement entre 90 degrés Celsius et 100 degrés Celsius préalablement à l'atomisation par les buses d'atomisation.

11. Procédé selon l'une quelconque des revendications 7 à 10, dans lequel le produit pétrochimique est pressurisé à une pression d'entre 2 bars à 6 bars avant de l'injecter dans la chambre de ventilation par les buses d'atomisation.
